# EUROPEAN PATENT APPLICATION

(11) **EP 2 790 358 A1**
(43) Date of publication of application: **15.10.2014**
(21) Application number: 12855501.8
(22) Date of filing: 16.11.2012
(51) Int. Cl.: H04L 12/58

(54) **ANONYMOUS FRIEND-MAKING METHOD, SYSTEM, NETWORK SERVER AND STORAGE MEDIUM**

(30) Priority: 09.12.2011 CN 201110408418
(71) Applicant: Tencent Technology (Shenzhen) Company Limited, Shenzhen, Guangdong 518044 (CN)
(72) Inventor: PAN, Zihao, Shenzhen Guangdong 518044 (CN)
(74) Representative: Gunzelmann, Rainer
(86) International application number: PCT/CN2012/084715
(87) International publication number: WO 2013/082991

(57) **Abstract**

The present disclosure discloses a method, system, network server, storage medium for anonymous dating. The method, applying to a system for anonymous network dating, includes: obtaining dating information transmitted by a dating information sender, encrypting an account of the dating information sender; performing random pairing for the dating information sender in the system for anonymous network dating, determining information of a dating information receiver according to a pairing result; transmitting to the dating information receiver the dating information after the account is encrypted. According to the present disclosure, anonymous dating can be implemented and security of user's privacy is ensured.

## Description

### Field of the Invention

The present disclosure relates to a network field, more particularly, to a method, system, network server, storage medium for anonymous dating.

### Background of the Invention

In a current dating network, each user is allocated with an account. Conversations established by users are respectively for specific objects. And during a process of exchanging information, two dating users can know the users' accounts for each other. That is, in the network, a user uses an account during dating activities and network management activities; when performing dating with the user through the account, other users knows the user's account information and may associate or search the account through the account information and print information generated during the dating activities. Thus, risk of leaking privacy exists for the users in the dating network. When the users have scruples about privacy topics, requirements, that privacy such as the users' account information is not leaked when the users talk about the privacy topics, is not satisfied in a conventional dating system.

### Summary of the Invention

In order to solve a technical problem a method, system, network server for anonymous dating is provided according to examples of the present disclosure, so as to implement anonymous dating and ensure security of user's privacy.

A method for anonymous dating, applying to a system for anonymous network dating is provided according to an example of the present disclosure, which includes: obtaining dating information transmitted by a dating information sender, encrypting an account of the dating information sender; performing random pairing for the dating information sender in the system for anonymous network dating, determining information of a dating information receiver according to a pairing result; transmitting to the dating information receiver the dating information after the account is encrypted.

Furthermore, a system for anonymous network dating is provided according to an example of the present disclosure, which includes a network server and a client of a dating information receiver. The network server is to encrypt an account of a dating information sender, perform random pairing for the dating information sender in the system for anonymous network dating, determine information of a dating information receiver according to a pairing result, and transmit to the dating information receiver dating information after the account is encrypted. The client of the dating information receiver is to receive the dating information after the account is encrypted, display the dating information.

Furthermore, a network server, applying to a system for anonymous network dating is provided according to an example of the present disclosure, which includes: an encrypting module, a pairing module and a transmitting module. The encrypting module is to encrypt an account of a dating information sender. The pairing module is to perform random pairing for the dating information sender in the system for anonymous network dating, determine information of a dating information receiver according to a pairing result. The transmitting module is to transmit to the dating information receiver the dating information after the account is encrypted.

Furthermore, a storage medium storing instructions is provided according to an example of the present disclosure. When executed by a computer, the instructions will cause the computer to: obtain dating information transmitted by a dating information sender, encrypt an account of the dating information sender; perform random pairing for the dating information sender in the system for anonymous network dating, determine information of a dating information receiver according to a pairing result; and transmit to the dating information receiver the dating information after the account is encrypted.

It can be seen from the above, according to examples of the present disclosure, in a dating system, a user's account is encrypted, and a receiver is searched out in a manner of random pairing, so that the receiver cannot obtain the user account information when dating is performed through a dating network, and security of private information is ensured.

### Brief Description of Drawings

FIG. 1 is a flowchart illustrating a method for anonymous dating in accordance with an example of the present disclosure;
FIG. 2 is a schematic diagram illustrating a structure of a system for anonymous network dating in accordance with an example of the present disclosure;
FIG. 3 is a schematic diagram illustrating a structure of a network server for anonymous dating in accordance with an example of the present disclosure.

### Detailed Description of the Invention

Technical solutions according to examples of the present invention will be clearly illustrated in detail hereinafter with reference to the accompanying drawings. Obviously, the described examples are only partial examples of the present disclosure, but are not all examples. According to the examples of the present disclosure, those skilled in the art can obtain other examples without creative labor, which belong to the protection scope of the present disclosure.

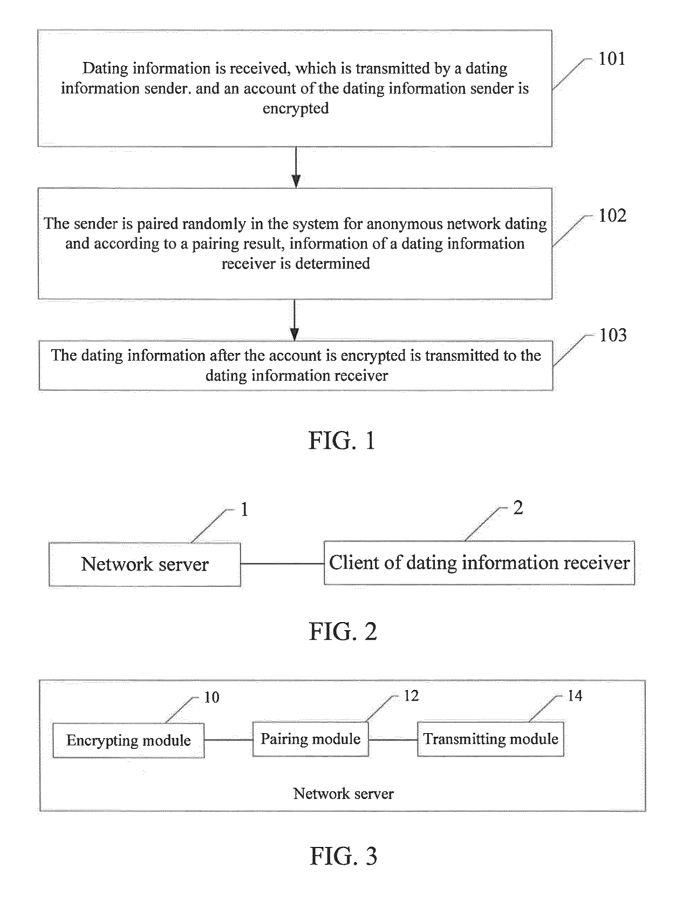

As shown in FIG. 1, a method for anonymous dating is provided according to an example of the present disclosure. The method applies to a system for anonymous network dating. The system for anonymous network dating may be based on instant messaging or an anonymous Email. The method includes the following procedures.

At block 101, dating information is received, which is transmitted by a dating information sender. An account of the dating information sender is encrypted.

During an encrypting process, a network address and the account of the dating information sender may be encrypted at the same time, and/or the account of the dating information sender is encrypted according to a DES encryption algorithm.

At block 102, the sender is paired randomly in the system for anonymous network dating. According to a pairing result, information of a dating information receiver is determined.

For example, random pairing is performed according to a keyword of personal information of the sender and the receiver. The receiver is a user that agrees to receive the anonymous dating information. Information of the receiver has been stored in a database in the system for anonymous network dating. For one user, the user may be the dating information sender, may also be the dating information receiver.

Methods for random pairing may be any one of the following methods, but may be not limited in the following methods: 1. pairing users in close regions; 2. pairing users whose birthdays are close to each other; 3. pairing homosexual or heterosexual users; 4. pairing users in a same age range; 5. pairing users having a same interest; 6. a method that mixes any two or more methods above. That is, the users may be paired according to a keyword of personal information such as social information related with the users, wherein the keyword of the personal information may include such as a region, a birthday, a gender, an age, an interest and so on.

The pairing methods above are based on an information matching degree of the dating information sender and the dating information receiver. In an example, in a drift bottle dating system, the sender transmits the dating information. One or more dating information receivers may be selected according to a region where the information receiver locates. After receiving the dating information, the one or more information receivers may choose to ignore the dating information or to respond the dating information. In another example, in the dating system such as marriage seeking system, according to a gender, an age and other pairing requirements, a user that has a different gender but in the same age range with the sender may be selected out as the receiver. Moreover, in the pairing processing, a privacy level may be further considered. Information for pairing may be different for users with different privacy levels. For example, if certain users may not agree to adopt personal information such as the gender and the age for pairing, the personal information not agreed by the users for pairing may not be adopted for pairing with other users so as to reduce possibility of leaking information.

At block 103, the dating information after the account is encrypted is transmitted to the dating information receiver.

In order to improve security of the user's account, in addition to encrypt the user's account, the network address of the dating information sender may be encrypted. That is, at block S103, the network address of the dating information, sender is further encrypted.

A way for encrypting the information above such as the account may through the DES encryption algorithm (which is a symmetric cryptosystem, and is also called as a US Data Encryption Standard). In the condition that a digital sequence number is taken as the user's account, the DES encryption algorithm may be adopted, and version information may be added to an encryption result so as to upgrade and update the algorithm.

In an example of the present disclosure, as the account of the dating information sender is encrypted, the user of the receiver randomly paired with the sender may not obtain the account of the sender. Thus, it is avoided that the receiver obtains information of the dating information sender through the account, e.g., an instant messaging number, an IP address, an age, an address, a telephone number and a gender and privacy protection is improved in the anonymous dating system. In an example of the present disclosure, dating pairing is performed in a manner of random pairing so as to reduce possibility of repetition of users' dating objects.

Accordingly, as shown in FIG. 2, a system for anonymous network dating is provided according to an example of the present disclosure, which includes a network server 1 and a client 2 of a dating information receiver.

The network server 1 is to encrypt an account of a dating information sender, perform random pairing for the dating information sender in the system for anonymous dating, determine information of the dating information receiver according to a pairing result, and transmit to the dating information receiver the information after the account is encrypted.

Methods for random pairing may be any one of the following methods, but may be not limited in the following methods: 1. pairing users in close regions; 2. pairing users whose birthdays are close to each other; 3. pairing homosexual or heterosexual users; 4. pairing users in a same age range; 5. pairing users having a same interest; 6. a method that mixes any two or more methods above. That is, the users may be paired according to a keyword of personal information such as social information related with the users, wherein the keyword of the personal information may include such as a region, a birthday, a gender, an age, an interest and so on.

The pairing methods above are based on an information matching degree of the dating information sender and the dating information receiver. In an example, in a drift bottle dating system, the sender transmits the dating information. One or more dating information receivers may be selected according to a region where the information receiver locates. After receiving the dating information, the one or more information receivers may choose to ignore the dating information or to respond the dating information. In another example, in the dating system such as marriage seeking system, according to a gender, an age and other pairing requirements, a user that has a different gender but in the same age range with the sender may be selected out as the receiver. Moreover, in the pairing processing, a privacy level may be further considered. Information for pairing may be different for users with different privacy levels. For example, if certain users may not agree to adopt personal information such as the gender and the age for pairing, the personal information not agreed by the users for pairing may not be adopted for pairing with other users so as to reduce possibility of leaking information.

It can be seen from the example above that, information of a large number of users is stored in the network server 1. The information representing a user's personal attribute may be used for pairing between different users. The server may transmit the dating information according to the pairing result. Different users may agree to use different personal information for anonymous dating. When performing the pairing, the server may pair users according to information agreed to be used for pairing by the users.

The client 2 of the dating information receiver is to receive the dating information after the account is encrypted, only display the dating information. Since the account of the sender is encrypted, the client of the receiver may not decrypt and display the account. Thus, only the dating information transmitted by the sender is displayed, e.g., a network message, a picture, an audio and an audio and video link.

The system for anonymous network dating may include multiple clients. The clients may be as dating information senders, also as dating information receivers. A user may run a client to log in the dating system through a certain account. The client transmits dating information to the server. The server obtains the personal information of the account according to the received dating information and the account of the sender, transmits the dating information to other users through pairing.

As shown in FIG. 2, in the system, although a line between the network server and the client of the dating information receiver is a solid line, it may not mean that the two may only be connected via a wired network. The client may be installed in a device such as personal computer, a mobile terminal. The network server and the dating information receiver may be connected via a wired and wireless network. Moreover, although one network server and one client of the dating information receiver are shown in FIG. 2, the system may include multiple network servers and multiple clients of dating information receivers in another example. The example in FIG. 2 cannot be limitation for examples of the present disclosure.

FIG. 3 is a schematic diagram illustrating a structure of a network server according to an example of the present disclosure. The network server applies to a system for anonymous network dating, wherein the system for anonymous network dating may be based on instant messaging or an anonymous Email. The network server may include: an encrypting module 10, to encrypt an account of a dating information sender; a pairing module 12, to perform random pairing for the sender in the system for anonymous network dating, determine information of a dating information receiver according to a pairing result; a transmitting module 14, to transmit to the dating information receiver the dating information after the account is encrypted. In the example, the receiver may be a user agreeing to receive the anonymous dating information. The information of the receiver is stored in a database. A user may be the sender, may also be a receiver.

In an example of the present disclosure, a receiver cannot directly see an account after the account is encrypted. Thus, the receiver cannot perform searching according to the account, so as to avoid leaking privacy of the dating information sender.

In order to improve security of the user's account, in addition to encrypt the user's account, the network address may further be encrypted. That is, the encrypting module 10 is further to encrypt the network address of the dating information sender.

A way for encrypting the information above such as the account may through the DES encryption algorithm (which is a symmetric cryptosystem, and is also called as a US Data Encryption Standard). In the condition that a digital sequence number is taken as the user's account, the DES encryption algorithm may be adopted, and version information may be added to an encryption result so as to upgrade and update the algorithm.

In the system for anonymous dating according to an example of the present disclosure, as the account of the dating information sender is encrypted, the user of the receiver randomly paired may not obtain the account of the sender. Thus, it is avoided that the receiver obtains the information of the dating information sender through the account, e.g., an age, an address, a telephone number and a gender, and privacy protection is improved in the anonymous dating system. In an example of the present disclosure, dating pairing is performed in a manner of random pairing so as to reduce possibility of repetition of users' dating objects.

It should be noted that, explanations of terms in the server example and the system example above are the same as those in the method example above, which are not descripted repeatedly herein.

It can be seen from the above, according to examples of the present disclosure, in a dating system, a user's account is encrypted, and a receiver is searched out in a manner of random pairing, so that the receiver cannot obtain the user account information when dating is performed through a dating network, and security of private information is ensured.

Those skilled in the art can understand that all or part of steps in the method provided according to the examples of the present disclosure can be implemented by instructing related hardware by a computer program, the program may be stored in a readable memory of a computer, and above method steps are included when the program is operated. The memory includes a Disk, an optical disk, a read-only memory storage (ROM) or a random access memory (RAM) and so on.

The foregoing is only preferred examples of the present disclosure and is not used to limit the protection scope of the present invention. Any equivalent substitution according to claims of the present invention is within the protection scope of the present invention.

### Industrial Applicability

According to the present disclosure, in a dating system, a user's account is encrypted, and a receiver is searched out in a manner of random pairing, so that the receiver cannot obtain the user's account information when dating is performed through a dating network, and security of private information is ensured.

## Claims

1. A method for anonymous dating, applying to a system for anonymous network dating, comprising:
obtaining dating information transmitted by a dating information sender, encrypting an account of the dating information sender;
performing random pairing for the dating information sender in the system for anonymous network dating, determining information of a dating information receiver according to a pairing result;
transmitting to the dating information receiver the dating information after the account is encrypted.

2. The method of claim 1, wherein encrypting the account of the dating information sender comprises:
encrypting the account of the information sender according to a DES encryption algorithm.

3. The method of claim 1, wherein encrypting the account of the information sender comprises:
encrypting the account and a network address of the dating information sender.

4. The method of any of claims 1-3, wherein performing random pairing for the dating information sender comprises:
performing the random pairing according to a keyword of personal information of the dating information sender and the dating information receiver.

5. The method of claim 4, the keyword of the personal information comprises: a region, a birthday, a gender, an age, an interest.

6. A system for anonymous network dating, comprising:
a network server, to encrypt an account of a dating information sender, perform random pairing for the dating information sender in the system for anonymous network dating, determine information of a dating information receiver according to a pairing result, and transmit to the dating information receiver dating information after the account is encrypted;
a client of the dating information receiver, to receive the dating information after the account is encrypted, display the dating information.

7. A network server, applying to a system for anonymous network dating, comprising:
an encrypting module, to encrypt an account of a dating information sender;
a pairing module, to perform random pairing for the dating information sender in the system for anonymous network dating, determine information of a dating information receiver according to a pairing result;
a transmitting module, to transmit to the dating information receiver the dating information after the account is encrypted.

8. The network server of claim 7, wherein the encrypting module is further to encrypt a network address of the dating information sender.

9. The network server of claim 7, wherein the encrypting module is to encrypt the account of the dating information sender according to a DES encryption algorithm.

10. The network server of any of claims 7-9, wherein the pairing module is to perform the random pairing according to a keyword of personal information of the dating information sender and the dating information receiver.

11. A storage medium, storing instructions, which, when executed by a computer, will cause the computer to:
obtain dating information transmitted by a dating information sender, encrypt an account of the dating information sender;
perform random pairing for the dating information sender in the system for anonymous network dating, determine information of a dating information receiver according to a pairing result; and
transmit to the dating information receiver the dating information after the account is encrypted.

12. The storage medium of claim 11, wherein encrypt the account of the dating information sender comprises:
encrypt the account of the information sender according to a DES encryption algorithm.

13. The storage medium of claim 11, wherein encrypt the account of the information sender comprises:
encrypt the account and a network address of the dating information sender.

14. The storage medium of any of claims 11-13, wherein perform the random pairing for the dating information sender comprises:
perform the random pairing according to a keyword of personal information of the dating information sender and the dating information receiver.
